(19) Europäisches Patentamt
European Patent Office
Office européen des brevets

(11) EP 4 787 504 A1

(12) **EUROPEAN PATENT APPLICATION**
published in accordance with Art. 153(4) EPC

(43) Date of publication:
05.08.2026 Bulletin 2026/32

(21) Application number: 24871449.5

(22) Date of filing: 11.07.2024

(51) International Patent Classification (IPC):
H01M 8/028 (2016.01)     C09J 7/30 (2018.01)
C09J 11/06 (2006.01)     C09J 133/00 (2006.01)
C09J 133/20 (2006.01)     C09J 163/00 (2006.01)
H01M 8/0284 (2016.01)     H01M 8/10 (2016.01)

(52) Cooperative Patent Classification (CPC):
C09J 7/30; C09J 11/06; C09J 133/00;
C09J 133/20; C09J 163/00; H01M 8/028;
H01M 8/0284; H01M 8/10; Y02E 60/50

(86) International application number:
PCT/JP2024/025178

(87) International publication number:
WO 2025/069645 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.09.2023 JP 2023169042

(71) Applicant: Tomoegawa Corporation
Tokyo 104-8335 (JP)

(72) Inventor: KONDOU, Yasufumi
Shizuoka-shi, Shizuoka 421-0192 (JP)

(74) Representative: V.O.
P.O. Box 87930
2508 DH Den Haag (NL)

(54) **POLYMER ELECTROLYTE FUEL CELL SEALING MATERIAL**

(57) The present invention addresses the problem of providing a polymer electrolyte fuel cell sealing material in which sealing performance is hardly reduced even after long-term operation of a polymer electrolyte fuel cell. In a polymer electrolyte fuel cell sealing material according to the present invention, a sheet-like adhesive member (1) contains an acrylic rubber (a), an epoxy resin (b), and an epoxy curing agent (c), and has an initial adhesive strength of 1.5 N/cm or higher as measured by the following method: (i) Prepare two sheets of sealing material cut to a width of 25 mm and a length of 100 mm; (ii) Bring the two sheet-like adhesive members into contact with each other over a length of 80 mm and bond them together using a roll laminator under conditions of a temperature of 100 °C, a pressure of 4 N/cm, and a lamination speed of 1 m/min to obtain a test piece; (iii) Respectively paste two polyimide films for fixing to two non-contact portions of the sheet-like adhesive members of the test piece, one end of one of the attached polyimide films being fixed to a lower chuck, and one end of the other attached polyimide film being fixed to an upper chuck; and (iv) Use a universal tensile testing machine to measure the T-peel strength at a tensile speed of 50 mm/min.

FIG. 1

**Description**

TECHNICAL FIELD

The present invention relates to a polymer electrolyte fuel cell sealing material.

BACKGROUND ART

A polymer electrolyte membrane to which a polymer electrolyte fuel cell sealing material is adhered is usually made of a fluorine-based resin having a perfluoroalkyl group as the main chain. For this reason, there has been a problem in that the adhesiveness of conventional sealing materials is insufficient.

Patent Document 1 discloses a method of bonding a solid polymer electrolyte membrane by thermocompression bonding in order to achieve good sealing properties. Furthermore, Patent Document 2 discloses a method for improving adhesiveness by subjecting the surface of a solid polymer electrolyte membrane to an ion exchange treatment. Moreover, Patent Document 3 discloses a method of improving adhesiveness by blending a fluorine atom-containing acrylic monomer into the adhesive.

Citation List

Patent Document

Patent Document 1: Japanese Unexamined Patent Application, First Publication No. H06-119928
Patent Document 2: Japanese Unexamined Patent Application, First Publication No. H09-199145
Patent Document 3: Japanese Unexamined Patent Application, First Publication No. 2004-269782

SUMMARY OF INVENTION

Technical Problem

With conventional sealing methods, it has been difficult to reliably seal the periphery of the solid polymer electrolyte membrane. In particular, when a polymer electrolyte fuel cell is operated for a long period of time, the polymer electrolyte fuel cell sealing material is exposed to acidic hot water at about 95 °C. It has been difficult to maintain high sealing performance to prevent hydrogen leakage in such an acidic hot water environment. For these reasons, there has been a demand for a polymer electrolyte fuel cell sealing material that would not experience a decline in sealing performance even after long-term operation of the polymer electrolyte fuel cell.

The present invention has been made in view of the above circumstances, and an object of the present invention is to provide a polymer electrolyte fuel cell sealing material whose sealing performance is hardly reduced even after long-term operation of a polymer electrolyte fuel cell.

Solution to Problem

A polymer electrolyte fuel cell sealing material according to a first aspect has a sheet-like adhesive member, wherein the sheet-like adhesive member comprises an acrylic rubber (a), an epoxy resin (b), and an epoxy curing agent (c), and the initial adhesive strength as measured by the following method (1) to (4) is 1.5 N/cm or higher.

(1) Prepare two sheets of a polymer electrolyte fuel cell sealing material cut to a width of 25 mm and a length of 100 mm.
(2) Bring the two sheet-like adhesive members into contact with each other over a length of 80 mm and bond them together using a roll laminator under conditions of a temperature of 100 °C, a pressure of 4 N/cm, and a lamination speed of 1 m/min to obtain a test piece.
(3) Paste two polyimide films for fixing to a universal tensile testing machine onto two locations of the sheet-like adhesive members at non-contact areas of the test piece, fix one end of one of the attached polyimide films to the lower chuck of the tensile device of the universal tensile testing machine, and fix one end of the other attached polyimide film to the upper chuck of the tensile device of the universal tensile testing machine.
(4) Use the universal tensile testing machine to measure the initial adhesive strength, which is the T-peel strength, of the fixed test piece at a tensile speed of 50 mm/min.

In the second aspect, the acrylic rubber (a) in the first aspect has at least one functional group selected from the group consisting of a carboxyl group, a hydroxyl group, and an epoxy group.

In the third aspect, the epoxy curing agent (c) in the first or second aspect is an acid anhydride, a phenolic compound, or a diamine compound.

In the fourth aspect, the epoxy curing agent (c) in any of the first to third aspects is an acid anhydride, a phenolic compound, or a diamine compound.

In the fifth aspect, the sheet-like adhesive member in any of the first to fourth aspects further comprises a curing accelerator (d).

In the sixth aspect, the curing accelerator (d) in the fifth aspect is dicyandiamide, a hydrazide compound, or an imidazole compound.

In the seventh aspect, the acrylic rubber (a) in any of the first to sixth aspects comprises a copolymer of at least one selected from acrylic acid esters and derivatives thereof, and at least one selected from acrylonitrile and derivatives thereof.

In the eighth aspect, the acrylic rubber (a) in the seventh aspect has a ratio (nitrile group/carbonyl group), measured by an ATR method using a Fourier transform infrared spectrophotometer, of an absorbance peak area at a wavenumber (1740 cm$^{-1}$) attributable to a carbonyl group of at least one selected from acrylic esters and derivatives thereof, to an absorbance peak area at a wavenumber (2240 cm$^{-1}$) attributable to a nitrile group of at least one selected from acrylonitrile and derivatives thereof, of 0.001 to 0.05.

In the ninth aspect, in any one of the first to ninth aspects, the epoxy resin (b) is present in an amount of 1 to 150 parts by mass per 100 parts by mass of the acrylic rubber (a).

In the tenth aspect, in any one of the first to ninth aspects, the functional group equivalent ratio of the epoxy curing agent (c) to the epoxy resin (b) is 0.1 to 0.9. Advantageous Effects of Invention

According to the present invention, it is possible to provide a polymer electrolyte fuel cell sealing material whose sealing performance is hardly reduced even after long-term operation of a polymer electrolyte fuel cell.

BRIEF DESCRIPTION OF DRAWINGS

[FIG. 1] A perspective view showing an example of a sealing material.
[FIG. 2] A perspective view showing an example of a sealing material.
[FIG. 3] A perspective view showing an example of a sealing material.
[FIG. 4] An exploded perspective view showing an example in which a sealing material is used in a single cell.
[FIG. 5] An explanatory diagram of a method for measuring the adhesive strength between a solid polymer electrolyte membrane and a sealing material.
[FIG. 6] An explanatory diagram of a method for measuring the adhesive strength between two sealing materials.

DESCRIPTION OF EMBODIMENTS

Hereinbelow, the present invention will be described based on preferred embodiments.

The sealing material of the present embodiment is a polymer electrolyte fuel cell sealing material, and includes a sheet-like adhesive member. The sheet-like adhesive member comprises an acrylic rubber (a), an epoxy resin (b), and an epoxy curing agent (c).

The acrylic rubber (a) plays a role in maintaining an appropriate melt viscosity of the sheet-like adhesive member in the initial stage of heating, and can impart good flexibility and adhesiveness to the cured sheet-like adhesive member. This allows the formation of a crack-free sealing material that has good adhesion to the solid polymer electrolyte membrane, electrodes, and separators.

As the acrylic rubber (a), an acrylic rubber having at least one functional group selected from the group consisting of a carboxyl group, a hydroxyl group, and an epoxy group is used. Generally, acrylic rubber (ACM) is made of a polymer whose main component is an acrylic acid ester. The acrylic rubber (a) preferably contains a copolymer of at least one of an acrylic acid ester and a derivative thereof, and at least one of acrylonitrile and a derivative thereof.

The acrylic acid ester is not particularly limited as long as two or more kinds thereof are copolymerizable with each other or with acrylonitrile, and examples thereof include methyl acrylate, ethyl acrylate, butyl acrylate, 2-ethylhexyl acrylate, 2-dimethylaminoethyl acrylate, 2-hydroxyethyl acrylate, and derivatives thereof. Examples of the derivatives of acrylic acid esters include unsaturated carboxylic acid esters such as methacrylic acid esters.

Examples of acrylonitrile and its derivatives include unsaturated carboxylic acid nitriles such as acrylonitrile and methacrylonitrile.

The functional group of the acrylic rubber (a) is preferably derived from at least one functional group-containing monomer selected from the group consisting of a carboxyl group-containing monomer, a hydroxyl group-containing monomer, and an epoxy group-containing monomer. At least a part of the functional group-containing monomer may also serve as an acrylic acid ester and its derivatives.

The carboxyl group-containing monomer is not particularly limited, but examples thereof include unsaturated carboxylic acids such as (meth)acrylic acid, itaconic acid, maleic acid, fumaric acid, and crotonic acid. Anhydrides of these carboxyl group-containing monomers can also be used as the carboxyl group-containing monomer. (Meth)acrylic acid means acrylic acid and/or methacrylic acid.

Examples of hydroxyl group-containing monomers include 2-hydroxyethyl (meth)acrylate, 2-hydroxypropyl (meth)acrylate, 3-hydroxypropyl (meth)acrylate, 4-hydroxybutyl (meth)acrylate, 2-hydroxy-3-chloropropyl (meth)acrylate, and 2-hydroxy-3-phenoxypropyl (meth)acrylate.

Examples of epoxy group-containing monomers include glycidyl (meth)acrylate and 2-ethyl (meth)acrylate glycidyl ether.

The acrylic rubber (a) may be a copolymer containing other monomers in addition to the above-mentioned monomers, as long as the properties of the copolymer are not affected. Examples of other monomers include amino group-containing monomers such as dimethylaminoethyl (meth)acrylate and diethylaminoethyl (meth)acrylate, and amide group-containing monomers such as (meth)acrylamide and N-methylol (meth)acrylamide.

As a method for producing a copolymer of an acrylic acid ester or the like or a copolymer containing an acrylic acid ester or the like and acrylonitrile or the like, a general copolymerization method such as suspension polymerization or emulsion polymerization is used.

The weight average molecular weight (Mw) of the acrylic rubber (a) is not particularly limited, but is preferably 100,000 or more and 2,000,000 or less. If the Mw is less than the above range, the flexibility of the cured product tends to decrease, resulting in reduced sealing properties. On the other hand, if the Mw exceeds the above range, the coating material will become significantly thicker when formulated, causing a loss of fluidity (gelation), and making the coating material difficult to handle. The Mw is measured by gel permeation chromatography (GPC) in terms of standard polystyrene.

The acrylic rubber (a) preferably has a ratio (nitrile group/carbonyl group) of 0.001 to 0.05 between the peak area of absorbance at a wavenumber (1740 cm$^{-1}$) attributable to a carbonyl group of at least one of the acrylic esters and derivatives thereof and the peak area of absorbance at a wavenumber (2240 cm$^{-1}$) attributable to a nitrile group (or, equivalently, a cyano group) of at least one of the acrylonitriles and derivatives thereof, as measured by an attenuated total reflection (ATR) method using a Fourier transform infrared spectrophotometer.

If the "nitrile group/carbonyl group" ratio is less than the above range, the adhesiveness will be poor, and bonding will not be possible, or even if bonding is possible, there will be a tendency for the sealant to easily peel when subjected to stress or load, or for the sealant to be easily destroyed or peeled when heated. On the other hand, if the "nitrile group/carbonyl group" ratio exceeds the above range, compatibility with solvents and compatibility with other resins will be poor, making it difficult to form the resin into a coating material.

The epoxy resin (b) can impart acid and hot water resistance to the sealing material by reacting with the acrylic rubber (a) and/or the epoxy curing agent (c).

Examples of the epoxy resin (b) include bisphenol A type epoxy resins, bisphenol F type epoxy resins, bisphenol AD type epoxy resins, bisphenol S type epoxy resins, alicyclic epoxy resins, phenol novolac type epoxy resins, cresol novolac type epoxy resins, and glycidyl ether type epoxy resins, and these can be used alone or in combination of two or more.

The epoxy resin (b) preferably has a number-average molecular weight of 300 to 5,500, more preferably 300 to 2,000. If the number-average molecular weight is less than 300, the reactivity with other components will be too high, and the storage stability of the resulting sealing material will tend to decrease. On the other hand, if the number-average molecular weight exceeds 5,500, the compatibility with other components, particularly the acrylic rubber (a), decreases, and the uniformity of the resulting sealing material tends to deteriorate.

The epoxy resin (b) preferably has an epoxy equivalent of 150 to 2,500, more preferably 300 to 1,000. If the epoxy equivalent is less than 150, the reactivity with other components will be too high, and the storage stability of the resulting sealing material will tend to decrease. On the other hand, if the epoxy equivalent exceeds 2500, the reactivity with other components becomes insufficient, and the resulting sealing material becomes less viscous and more likely to flow when heated. As a result, when the sealing material is heated, the viscosity of the sealing material decreases, and the sealing material tends to foam or flow out, and the thermal stability tends to decrease.

It is preferable that the epoxy resin (b) is 1 to 150 parts by mass per 100 parts by mass of the acrylic rubber (a). If the proportion of the epoxy resin (b) is less than the above range, the reactivity of the sealing material decreases, the insolubility and infusibility of the sealing material decreases even when heated, and the thermal stability tends to decrease. On the other hand, if the ratio of the epoxy resin (b) exceeds the above range, the flexibility of the resulting sealing material tends to decrease, and the sealing performance tends to deteriorate.

The epoxy curing agent (c) may be an acid anhydride, a phenolic compound, or a diamine compound. Among these, aromatic diamine compounds are preferred from the viewpoint of reactivity and storage stability. The epoxy curing agent (c) can be used alone or in combination of two or more kinds.

Examples of diamine compounds include: 3,4'-diaminodiphenyl ether, 4,4'-diaminodiphenyl ether, 3,3'-dimethyl-4,4'-diaminodiphenyl ether, 3,3'-diaminodiphenyl ether, 4,4'-diaminobenzophenone, 3,3'-dimethyl-4,4'-diaminobenzophenone, 3,3'-diaminodiphenylmethane, 3,3'-dimethoxy-4,4'-diaminodiphenylmethane,2,2'-bis(3-aminophenyl) propane, 4,4'-diaminodiphenyl sulfone, 3,3'-diaminodiphenyl sulfone, benzidine, 3,3'-dimethylbenzidine, 3,3'-dimethoxybenzidine, 3,3'-diaminobiphenyl, 1,3-bis(3-aminophenoxy)benzene, 2,2-bis[4-(4-aminophenoxy)phenyl]propane,2,2-bis[3-methyl-4-(4-aminophenoxy)phenyl]propane, 2,2-bis[3-chloro-4-(4-aminophenoxy)phenyl]propane, 2,2-bis[3,5-dimethyl-4-(4-aminophenoxy)phenyl]propane, 1,1'-bis[4-(4-aminophenoxy)phenyl]ethane, 1,1'-bis[3-chloro-4-(4-aminophenoxy)phenyl]ethane, bis[4-(4-aminophenoxy)phenyl]methane, bis[3-methyl-4-(4-aminophenoxy)phenyl]methane, 4,4'-[1,4-phenylenebis(1-methylethylidene)]bis-aniline, 4,4'-[1,3-phenylenebis(1-methylethylidene)]bis-aniline, and 4,4'-[1,4-phenylenebis(1-methylethylidene)]bis(2,6-dimethyl-bis-aniline).

The functional group equivalent ratio of the epoxy curing agent (c) to the epoxy resin (b), expressed as the ratio (c)/(b), is preferably 0.1 to 0.9, and more preferably 0.2 to 0.6. If the functional group equivalent ratio is less than 0.1, the crosslink density of the epoxy resin in the sheet-like adhesive member composition will be low, and the acidic hot water resistance will tend to decrease. On the other hand, if the functional group equivalent ratio exceeds 0.9, crosslinking of the epoxy resin in the sheet-like adhesive member composition proceeds, and the adhesiveness at the B stage tends to decrease.

The content of the epoxy curing agent (c) is preferably 0.01 to 50 parts by mass relative to 100 parts by mass of the acrylic rubber (a). If the content of the epoxy curing agent (c) is less than 0.01 parts by mass, the crosslink density of the epoxy resin in the sheet-like adhesive member composition becomes sparse, and the acidic hot water resistance tends to decrease. On the other hand, if the content of the epoxy curing agent (c) exceeds 50 parts by mass, crosslinking of the epoxy resin in the sheet-like adhesive member composition proceeds, and the adhesiveness at the B stage tends to decrease. By partially crosslinking the epoxy resin (b) and the epoxy curing agent (c), a sheet-like adhesive member in a stable B-stage state can be produced.

The sheet-like adhesive member may further contain a curing accelerator (d). Examples of the curing accelerator (d) include dicyandiamide, a hydrazide compound, and an imidazole compound. The curing accelerator (d) may be used alone or in combination of two or more. The curing accelerator (d) may be in the form of a microcapsule.

The sheet-like adhesive member may further contain a filler having an average particle size of 1 μm or less for the purposes of controlling the melt viscosity, improving the thermal conductivity, imparting flame retardancy, and the like. Examples of the filler include inorganic fillers such as silica, alumina, magnesia, aluminum nitride, boron nitride, titanium oxide, calcium carbonate, and aluminum hydroxide, and organic fillers such as silicone resins and fluororesins. When a filler is used, the content thereof in the sheet-like adhesive member is preferably 1 to 40% by mass. If the filler content is less than 1% by mass, the intended effect tends not to be achieved. On the other hand, if the filler content exceeds 40% by mass, the coating material will become excessively viscous, making it difficult to form a sheet-like film. Even if a film can be formed, the proportion of filler in the sheet-like adhesive member is large, which tends to impair flexibility and adhesiveness, resulting in poor sealing properties.

The sheet-like adhesive member may contain other components in addition to (a) to (d) as long as the components do not affect the properties.

The method for producing the sealing material is not particularly limited, but for example, first, a coating material containing a mixture of the acrylic rubber (a), the epoxy resin (b), and the epoxy curing agent (c) is prepared. Next, the adhesive is applied to one side of the substrate (or the release side in the case of a peelable protective film) so that the thickness of the sheet-like adhesive member after drying is preferably 1 to 50 μm, more preferably 3 to 20 μm, and then the adhesive is dried and the solvent is removed to form a sheet-like adhesive member, which can be produced by a method such as cutting it into a frame shape. The substrate used for coating may be peeled off from the sheet-like adhesive member after the sheet-like adhesive member is formed. Here, in order to protect the sealing material, it is preferable to provide a peelable protective film on the exposed surface of the sheet-like adhesive member of the sealing material. The protective film is peeled off when the sealing material is used.

The coating material of the sheet-like adhesive member can be prepared by dissolving components kneaded in a roll mill or the like in a liquid medium, or by mixing or dispersing solutions in which each component has been dissolved in advance in a liquid medium.

The thickness of the sheet-like adhesive member after drying is preferably 1 to 50 μm, and more preferably 3 to 20 μm. If the thickness of the sheet-like adhesive member is less than 1 μm, the sealing performance tends to decrease due to the thin thickness. On the other hand, if the thickness of the sheet-like adhesive member exceeds 50 μm, poor drying is likely to occur when the member is applied and dried, and if the member is used in a state containing residual solvent, air bubbles are likely to form inside the sheet-like adhesive portion, which not only reduces sealing performance but also tends to increase costs due to reduced productivity.

The shape of the sealing material is not limited to a rectangular frame, but may be selected appropriately according to the shape of the fuel cell, such as a circular frame. When processing the sealing material, a tape-shaped sealing material having through holes at predetermined intervals in the length direction may be used. A frame-shaped sealing material can be obtained by cutting the sealing material so that the through-hole is included in the center.

The sealing material has an initial adhesive strength of 1.5 N/cm or more, preferably 1.5 to less than 2.5 N/cm, and more preferably 2.5 N/cm or more, as measured by the following initial adhesive strength measurement methods (1) to (4). When the initial adhesive strength is 1.5 N/cm or more, the adhesiveness between the sheet-like adhesive member in the sealing material and the adherend (including the substrate) and the adhesiveness between the sheet-like adhesive members to be bonded together are good, so that the polymer electrolyte fuel cell sealing material not only has excellent sealing properties, but also tends to have good adhesiveness when exposed to an acidic hot water environment. Furthermore, when the initial adhesive strength is less than 0.8 to 1.5 N/cm, the adhesiveness and sealing properties are inferior compared to when the initial adhesive strength is 1.5 N/cm or more, but the sealing properties tend to be sufficient for use as a polymer electrolyte fuel cell sealing material. If the initial adhesive strength is less than 0.8 N/cm, the adhesiveness is poor and the sealing property tends to be insufficient for use as a polymer electrolyte fuel cell sealing material.

(Method for measuring initial adhesive strength)

(1) Prepare two sheets of sealing material cut to a width of 25 mm and a length of 100 mm;
(2) Bring the two sheet-like adhesive members into contact with each other over a length of 80 mm and bond them together using a roll laminator under conditions of a temperature of 100 °C, a pressure of 4 N/cm, and a lamination speed of 1 m/min to obtain a test piece;
(3) Paste two polyimide films for fixing to a universal tensile testing machine onto two locations of the sheet-like adhesive members at non-contact areas of the test piece, fix one end of one of the attached polyimide films to the lower chuck of the tensile device of the universal tensile testing machine, and fix one end of the other attached polyimide film to the upper chuck of the tensile device of the universal tensile testing machine.
(4) Use the universal tensile testing machine to measure the initial adhesive strength, which is the T-peel strength, of the fixed test piece at a tensile speed of 50 mm/min.

Furthermore, the sealing material preferably has a mass change rate of 5 to 10%, more preferably less than 5%, as measured by the following method. When the mass change rate is less than 5%, the change in physical properties of the sealing material in an acidic hot water environment is small, and therefore the sealing material tends to have sufficient acidic hot water resistance as a polymer electrolyte fuel cell sealing material. Furthermore, when the mass change rate is 5 to 10%, compared to less than 5%, although the sealing material undergoes some changes in physical properties in an acidic hot water environment, it tends to have acidic hot water resistance sufficient for use as a polymer electrolyte fuel cell sealing material. If the mass change rate exceeds 10%, the physical properties of the sealing material change significantly in an acidic hot water environment, and the sealing material tends to lack sufficient acidic hot water resistance as a polymer electrolyte fuel cell sealing material.

(Method for measuring mass change rate)

(1) Prepare two sheets of sealing material, bring the adhesive members of the two sealing materials into contact with each other and bond them together using a roll laminator under the conditions of a temperature 100 °C, a pressure 4 N/cm, and a lamination speed 1 m/min, and cut the resulting sheet into a 50 mm × 50 mm piece to obtain the test piece.
(2) Measure the mass of the test piece before and after immersion in a sulfuric acid aqueous solution (pH 2) at 95 °C for 250 hours, 500 hours, 750 hours, or 1,000 hours, and then calculate the mass change rate based on the following formula. The test pieces used after immersion are those which have had the moisture on their surfaces wiped off and are left to stand for 1 hour in an environment of 25 °C/50% RH.

Mass change rate = [mass of test piece before immersion/mass of test piece after immersion] × 100 (%)

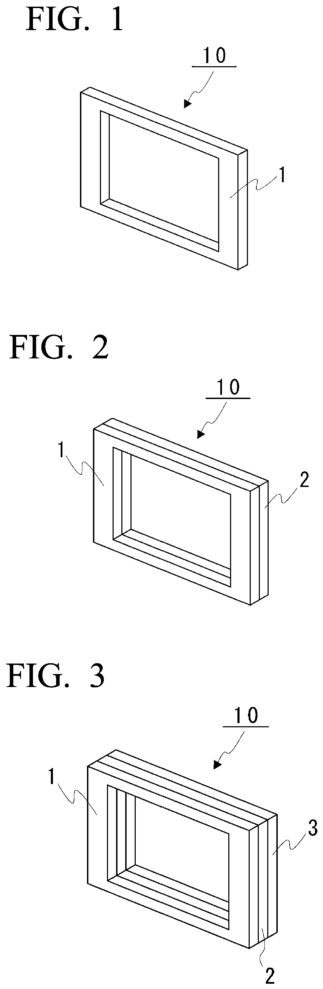

FIG. 1 shows an example of the sealing material. The sealing material 10 in the illustrated example is made up of only a sheet-like adhesive member 1 having a rectangular frame shape.

The sheet-like adhesive member 1 can be used not only as a single layer sealing material 10 but also to produce a sealing material 10 having the sheet-like adhesive member 1 on at least one side of the substrate 2 as shown in FIG. 2.

The sealing material 10 may also have a three-layer structure in which the sheet-like adhesive member 1, the substrate 2, and an adhesive layer 3 are laminated, as shown in FIG. 3.

The processing of the sheet-like adhesive member 1 can be carried out in parallel with the processing of the sealing material 10. For example, the sealing material 10 may be processed into a frame shape after bonding the tape-like sheet-like adhesive member 1 and the substrate 2 together and providing through holes in the longitudinal direction of the resulting laminate, or after bonding it to an electrode 20 described below.

Examples of the substrate 2 include heat-resistant plastic films made of polyimide, polyphenylene sulfide, polyether sulfone, polyether ether ketone, liquid crystal polymer, polyethylene terephthalate, polyethylene naphthalate, etc., and composite heat-resistant films such as epoxy resin-glass cloth, among which polyethylene naphthalate is particularly preferred from the viewpoints of acid and hot water resistance and cost.

The thickness of the substrate 2 is preferably 12 to 125 $\mu$m, and more preferably 12 to 50 $\mu$m. If the thickness is less than 12 $\mu$m, handling tends to be poor during processing. On the other hand, if the thickness exceeds 125 $\mu$m, the flexibility of the sealing material is impaired, and the ability to conform to the adherend is reduced, which in turn tends to lead to a decrease in sealing properties.

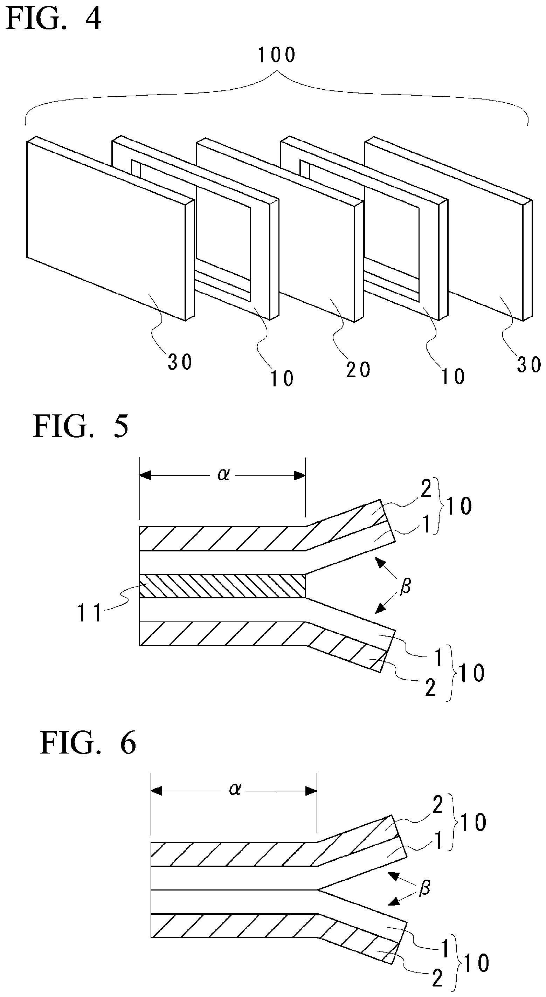

The sealing material of the embodiment can be used for a single cell in a stack of polymer electrolyte fuel cells. FIG. 4 is an exploded view of a unit cell 100, showing the sealing material 10, the electrode 20, and a separator 30 separately. In the unit cell 100, the sealing material 10 is in contact with both sides of the electrode 20, and the separator 30 is in contact with the surface of the sealing material 10 that is not in contact with the electrode 20. Examples of the electrode 20 include a membrane electrode assembly (MEA) for a fuel cell, a catalyst coated membrane (CCM) for a fuel cell, and a gas diffusion electrode (GDE). The separator 30 may be made of a fluorine-based resin having a perfluoroalkyl group as the main chain.

(Examples)

The present invention will be specifically described below with reference to examples.

The components were mixed in the compositions shown in Tables 1, 2 and 3 to obtain sheet-like adhesive member compositions. The sheet-like adhesive member composition was a paint using methyl ethyl ketone (MEK) as a liquid medium, which was applied to one side of a 16 $\mu$m thick polyethylene naphthalate (PEN) film and then dried in a hot air circulating oven set at 100 °C, thereby obtaining a sealing material consisting of a laminate in which a 20 $\mu$m thick sheet-like adhesive member was laminated on one side of the PEN film.

Details of each component used in the sheet-like adhesive member are as follows. The epoxy group-containing acrylic rubber (nitrile group/carbonyl group ratio 0.08, Mw=900,000) had poor solubility in methyl ethyl ketone and could not be made into a coating material. Furthermore, bisphenol F type epoxy resin (number-average molecular weight 8600, epoxy equivalent 4300 g/eq) was poorly compatible with acrylic rubber and separated, making it impossible to form a film.

(a-1) Carboxyl group-containing acrylic rubber: "Nitrile group/carbonyl group" 0.0036, Mw = 900,000
(a-2) Hydroxyl group-containing acrylic rubber: "Nitrile group/carbonyl group" 0.0064, Mw = 900,000
(a-3) Epoxy group-containing acrylic rubber: "Nitrile group/carbonyl group" 0.029, Mw = 900,000
(a-4) Epoxy group-containing acrylic rubber: "Nitrile group/carbonyl group" 0, Mw = 900,000
(b-1) Bisphenol A type epoxy resin: Number-average molecular weight 390, epoxy equivalent weight 180g/eq
(b-2) Bisphenol A type epoxy resin: Number-average molecular weight 4000, epoxy equivalent weight 2000g/eq
(b-3) Trifunctional epoxy resin: Number-average molecular weight 630, epoxy equivalent weight 210g/eq
(b-4) Bisphenol A type epoxy resin: Number-average molecular weight 5500, epoxy equivalent weight 4000 g/eq
(c-1) Acid anhydride: Pyromellitic anhydride, functional group equivalent: 109g/eq
(c-2) Phenolic compounds: Phenol novolac (TD-2091 manufactured by DIC Corporation) functional group equivalent: 140g/eq
(c-3) Diamine compounds: Diaminodiphenylmethane, functional group equivalent: 50g/eq
(d-1) Dicyandiamide
(d-2) Imidazole compounds: 2,4-diamino-6-[2'-methylimidazolyl-(1')]-ethyl-s-triazine-isocyanuric acid adduct
(d-3) Hydrazide compounds: Adipic acid dihydrazide
(d-4) Microcapsule-type curing agent: Asahi Kasei Corporation, Novacure (registered trademark) HX3941HP

[Table 1]

| | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| (a)Component Acrylic rubber (Parts by mass) | (a-1) | 100 | | | | 100 | 100 | 100 | 100 | 100 |
| | (a-2) | | 100 | | | | | | | |
| | (a-3) | | | 100 | | | | | | |
| | (a-4) | | | | 100 | | | | | |
| (b)Component Epoxy resin (Parts by mass) | (b-1) | 20 | 20 | 20 | 20 | | | | 20 | 20 |
| | (b-2) | | | | | 20 | | | | |
| | (b-3) | | | | | | 20 | | | |
| | (b-4) | | | | | | | 20 | | |
| (c)Component Epoxy curing agent (Parts by mass) | (c-1) | 5 | 5 | 5 | 5 | 0.5 | 5 | 0.25 | | |
| | (c-2) | | | | | | | | 4.8 | |
| | (c-3) | | | | | | | | | 2.3 |
| (d)Component Curing accelerator (Parts by mass) | (d-1) | 1 | 1 | 1 | 1 | 1 | 1 | 1 | 1 | 1 |
| | (d-2) | | | | | | | | | |
| | (d-3) | | | | | | | | | |
| | (d-4) | | | | | | | | | |
| Equivalent ratio | (c)/(b) | 0.413 | 0.413 | 0.413 | 0.413 | 0.459 | 0.482 | 0.459 | 0.415 | 0.414 |

[Table 2]

| | | Ex. 10 | Ex. 11 | Ex. 12 | Ex. 13 | Ex. 14 | Ex. 15 | Ex. 16 | Ex. 17 | Ex. 18 |
|---|---|---|---|---|---|---|---|---|---|---|
| (a)Component Acrylic rubber (Parts by mass) | (a-1) | 100 | 100 | 100 | 100 | 100 | 100 | 100 | 100 | |
| | (a-2) | | | | | | | | | |
| | (a-3) | | | | | | | | | 100 |
| | (a-4) | | | | | | | | | |
| (b)Component Epoxy resin (Parts by mass) | (b-1) | 20 | 20 | 20 | 1 | 10 | 50 | 100 | 150 | 20 |
| | (b-2) | | | | | | | | | |
| | (b-3) | | | | | | | | | |
| | (b-4) | | | | | | | | | |
| (c)Component Epoxy curing agent (Parts by mass) | (c-1) | 5 | 5 | 5 | 0.25 | 2.5 | 12.5 | 25 | 37.5 | |
| | (c-2) | | | | | | | | | |
| | (c-3) | | | | | | | | | 2 |
| (d)Component Curing accelerator (Parts by mass) | (d-1) | | | | 1 | 1 | 1 | 1 | 1 | |
| | (d-2) | 1 | | | | | | | | 1 |
| | (d-3) | | 1 | | | | | | | |
| | (d-4) | | | 4 | | | | | | |
| Equivalent ratio | (c)/(b) | 0.413 | 0.413 | 0.413 | 0.413 | 0.413 | 0.413 | 0.413 | 0.413 | 0.360 |

[Table 3]

| | | Ex. 19 | Ex. 20 | Ex. 21 | Comp. ex. 1 | Comp. ex. 2 | Ex. 22 | Comp. ex. 3 | Ex. 23 |
|---|---|---|---|---|---|---|---|---|---|
| (a)Component Acrylic rubber (Parts by mass) | (a-1) | 100 | 100 | 100 | 100 | 100 | 100 | 100 | 100 |
| | (a-2) | | | | | | | | |
| | (a-3) | | | | | | | | |
| | (a-4) | | | | | | | | |
| (b)Component Epoxy resin (Parts by mass) | (b-1) | 20 | 20 | 20 | | 20 | 20 | 20 | 180 |
| | (b-2) | | | | | | | | |
| | (b-3) | | | | | | | | |
| | (b-4) | | | | | | | | |
| (c)Component Epoxy curing agent (Parts by mass) | (c-1) | 2.5 | 7 | 10 | 0.25 | | 5 | 12 | 45 |
| | (c-2) | | | | | | | | |
| | (c-3) | | | | | | | | |
| (d)Component Curing accelerator (Parts by mass) | (d-1) | 1 | 1 | | 1 | 1 | | 1 | 1 |
| | (d-2) | | | | | | | | |
| | (d-3) | | | | | | | | |
| | (d-4) | | | | | | | | |
| Equivalent ratio | (c)/(b) | 0.206 | 0.578 | 0.826 | 0 | 0 | 0.413 | 0.991 | 0.413 |

(Evaluation)

The evaluation method for the sealing material obtained in each example will be described below.

(1) Adhesion evaluation (I)

(1-1) Preparation of test piece

The sealing material having the sheet-like adhesive member obtained in each example was cut into two pieces of sealing material having a width of 25 mm and a length of 100 mm. Separately, a solid polymer electrolyte membrane (manufactured by DuPont, trade name: Nafion membrane) was prepared and cut to a width of 25 mm and a length of 80 mm. Next, these members were bonded together as shown in FIG. 5. Specifically, the sealing material 10, in which the sheet-like adhesive member 1 was in contact with both sides of the solid polymer electrolyte membrane 11, was attached using a roll laminator to prepare a test piece. The lamination conditions were a temperature of 50 °C, a pressure of 4 N/cm, and a pressing speed of 1 m/min. The length $\alpha$ of the contact between the solid polymer electrolyte membrane 11 and the sheet-like adhesive member 1 is 80 mm. In addition, the portion $\beta$ of the sheet-like adhesive member 1 in FIG. 5 that is not attached to the solid polymer electrolyte membrane 11 (non-contact area of the test piece, length 20 mm) is an attachment portion when fixed to a universal tensile testing machine described next.

(1-2) Measurement of initial adhesive strength

The test piece prepared as described in (1-1) above was measured for T-peel strength using a universal tensile tester without being immersed in a 95 °C sulfuric acid aqueous solution (pH 2). That is, the upper $\beta$ in FIG. 5 was pulled upward in the figure, and at the same time the lower $\beta$ was pulled downward in the figure, and measurements were taken. Specifically, two polyimide films for fixing to a universal tensile tester were attached to two locations of the sheet-like adhesive member 1 at the non-contact areas (portion $\beta$) of the test piece that had not been immersed in the 95 °C sulfuric acid aqueous solution (pH 2), and then one end of one of the attached polyimide films was fixed to the lower chuck of the tensile device part of the universal tensile tester, and one end of the other attached polyimide film was fixed to the upper chuck of the tensile device part of the universal tensile tester.
The initial adhesive strength, which is the T-peel strength, of this fixed test piece was measured using a universal tensile tester at a pulling rate of 50 mm/min.

(1-3) Measurement of acid-resistant hot water test for 250 h

An acid-resistant hot water test using T-peel strength measurement was carried out in the same manner as in (1-2) above, except that the test piece in (1-1) above was immersed in a 95 °C sulfuric acid aqueous solution (pH 2) for 250 hours (instead of not being immersed), after which the moisture on the surface of the test piece was wiped off and the test piece was left to stand for 1 hour in an environment of 25 °C/50% RH.

The test results were evaluated as follows:

Good (A): After immersion, the test piece showed no interfacial peeling between the solid polymer electrolyte membrane and the sheet-like adhesive member. Furthermore, the failure mode in the T-peel strength measurement was found to occur within the solid polymer electrolyte membrane layer, but no interfacial peeling occurred between the solid polymer electrolyte membrane and the sheet-like adhesive member.

Defective (X): After immersion, the test piece exhibits interfacial peeling between the solid polymer electrolyte membrane and the sheet-like adhesive member, or the failure mode in the T-peel strength measurement shows interfacial peeling between the solid polymer electrolyte membrane and the sheet-like adhesive member.

(1-4) Measurement of acid-resistant hot water test for 500 h, 750 h, and 1,000 h

Measurement and evaluation were carried out in the same manner as described in (1-3), except that the immersion time was changed from 250 hours to 500 hours, 750 hours, and 1,000 hours, respectively.

(2) Adhesion evaluation (II)

(2-1) Preparation of test piece

The sealing material having the sheet-like adhesive member obtained in each example was cut into two pieces of sealing material having a width of 25 mm and a length of 100 mm. Next, these two sealing materials were bonded together as shown in FIG. 6. Specifically, the sheet-like adhesive members 1 of two sealing materials 10 were brought into contact with each other and laminated using a roll laminator to prepare a test piece. The lamination conditions were a temperature of 100 °C, a pressure of 4 N/cm, and a pressing speed of 1 m/min. The length $\alpha$ over which the two sheet-like adhesive members 1 were in contact with each other is 80 mm. Note that the portion $\beta$ of the sealing material 10 in FIG. 6 where the sheet-like adhesive member 1 is not attached (non-contact area of the test piece, length 20 mm) is an attachment portion when fixed to the universal tensile testing machine described next.

(2-2) Measurement of initial adhesive strength

The test piece prepared as described in (2-1) above was measured for T-peel strength using a universal tensile tester without being immersed in a 95 °C sulfuric acid aqueous solution (pH 2). That is, the upper $\beta$ in FIG. 6 was pulled upward in the figure, and at the same time the lower $\beta$ was pulled downward in the figure, and measurements were taken. Specifically, two polyimide films for fixing to a universal tensile tester were attached to two locations of the sheet-like adhesive member 1 at the non-contact areas (portion $\beta$) of the test piece that had not been immersed in the 95 °C sulfuric acid aqueous solution (pH 2), and then one end of one of the attached polyimide films was fixed to the lower chuck of the tensile device part of the universal tensile tester, and one end of the other attached polyimide film was fixed to the upper chuck of the tensile device part of the universal tensile tester.

The initial adhesive strength, which is the T-peel strength, of this fixed test piece was measured using a universal tensile tester at a pulling rate of 50 mm/min.

(2-3) Measurement of acid-resistant hot water test for 250 h

An acid-resistant hot water test using T-peel strength measurement was carried out in the same manner as in (2-2) above, except that the test piece in (2-1) above was immersed in a 95 °C sulfuric acid aqueous solution (pH 2) for 250 hours (instead of not being immersed), after which the moisture on the surface of the test piece was wiped off and the test piece was left to stand for 1 hour in an environment of 25 °C/50% RH.

The test results were evaluated as follows:

A (excellent): 2.5 N/cm or more
B (good): 1.5 to less than 2.5 N/cm
C (acceptable): 0.8 to less than 1.5 N/cm

X (defective): Less than 0.8 N/cm

(2-4) Measurement of acid-resistant hot water test for 500 h, 750 h, and 1,000 h

Measurement and evaluation were carried out in the same manner as described in (2-3), except that the immersion time was changed from 250 hours to 500 hours, 750 hours, and 1,000 hours, respectively.

(3) Mass change rate

(3-1) Preparation of test piece

Two sheets of the sealing material having the sheet-like adhesive member obtained in each example were prepared, and the two sealing materials were bonded together using a roll laminator so that the sheet-like adhesive members of the two sealing materials overlap each other. The lamination conditions were a temperature of 100 °C, a pressure of 4 N/cm, and a pressing speed of 1 m/min. Then, the sample was cut into a size of 50 mm × 50 mm, which was used as a test piece.

(3-2) Measurement of acid-resistant hot water test for 250 h

The mass of the test piece in (3-1) above was measured before and after immersion in a sulfuric acid aqueous solution (pH 2) at 95 °C for 250 hours, and then the mass change rate was calculated based on the following formula.

Mass change rate = [mass of test piece before immersion/mass of test piece after immersion] × 100 (%)

The test pieces used after immersion were those that had been immersed in a sulfuric acid aqueous solution (pH 2) at 95 °C for 250 hours, had the moisture on the surface of the test piece wiped off, and were left to stand in an environment of 25 °C/50% RH for 1 hour.
The test results were evaluated as follows: if the mass change rate was less than 5%, it was good (A); if the mass change rate was 5% to 10%, it was acceptable (B); and if the mass change rate was more than 10%, it was defective (X).

(3-3) Measurement of acid-resistant hot water test for 500 h, 750 h, and 1,000 h

Measurement and evaluation were carried out in the same manner as described in (3-2), except that the immersion time was changed from 250 hours to 500 hours, 750 hours, and 1,000 hours, respectively.
The results of the measurements and evaluations are shown in Tables 4, 5 and 6.

[Table 4]

| | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| Adhesion evaluation A | Initial adhesion strength (N/cm) | 3.8 | 3.1 | 3.4 | 2.7 | 1.9 | 3.5 | 1.4 | 3.1 | 3.6 |
| | Acid-resistant hot water test 250H | A | A | A | A | A | A | A | A | A |
| | Acid-resistant hot water test 500H | A | A | A | A | A | A | A | A | A |
| Bonding to electrolyte membrane | Acid-resistant hot water test 750H | A | A | A | A | A | A | A | A | A |
| | Acid-resistant hot water test 1000H | A | A | A | A | A | A | A | A | A |

(continued)

|  |  | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| Adhesion evaluation B Bonding of adhesive layers to each other | Initial adhesion strength (N/cm) | 4.1 | 3.3 | 3.5 | 2.9 | 2.2 | 3.8 | 1.5 | 3.5 | 3.9 |
|  | Acid-resistant hot water test 250H | A | A | A | A | B | A | B | A | A |
|  | Acid-resistant hot water test 500H | A | A | A | B | B | A | B | A | A |
|  | Acid-resistant hot water test 750H | A | A | A | B | B | A | C | A | A |
|  | Acid-resistant hot water test 1000H | A | B | A | C | B | A | C | B | A |
| Mass change rate (%) | Acid-resistant hot water test 250H | A3.7 | A3.8 | A3.5 | A4.9 | A4.4 | A3.3 | A4.7 | A3.5 | A3.3 |
|  | Acid-resistant hot water test 500H | A3.9 | A4.0 | A3.6 | C6.5 | A4.5 | A3.5 | C5.6 | A3.9 | A3.4 |
|  | Acid-resistant hot water test 750H | A4.1 | A4.1 | A3.8 | C8.0 | A4.9 | A3.7 | C7.9 | A4.4 | A3.5 |
|  | Acid-resistant hot water test 1000H | A4.3 | A4.2 | A4.1 | C9.5 | C5.5 | A3.9 | C9.4 | A4.9 | A3.8 |

[Table 5]

|  |  | Ex. 10 | Ex. 11 | Ex. 12 | Ex. 13 | Ex. 14 | Ex. 15 | Ex. 16 | Ex. 17 | Ex. 18 |
|---|---|---|---|---|---|---|---|---|---|---|
| Adhesion evaluation A Bonding to electrolyte membrane | Initial adhesion strength (N/cm) | 3.6 | 3.6 | 3.9 | 3.4 | 3.6 | 3.4 | 2.4 | 2.3 | 4.2 |
|  | Acid-resistant hot water test 250H | A | A | A | A | A | A | A | A | A |
|  | Acid-resistant hot water test 500H | A | A | A | A | A | A | A | A | A |
|  | Acid-resistant hot water test 750H | A | A | A | A | A | A | A | A | A |
|  | Acid-resistant hot water test 1000H | A | A | A | A | A | A | A | A | A |

(continued)

| | | Ex. 10 | Ex. 11 | Ex. 12 | Ex. 13 | Ex. 14 | Ex. 15 | Ex. 16 | Ex. 17 | Ex. 18 |
|---|---|---|---|---|---|---|---|---|---|---|
| Adhesion evaluation B Bonding of adhesive layers to each other | Initial adhesion strength (N/cm) | 3.9 | 4.0 | 4.2 | 3.5 | 3.8 | 3.9 | 2.9 | 2.6 | 4.5 |
| | Acid-resistant hot water test250H | A | A | A | A | A | A | A | A | A |
| | Acid-resistant hot water test500H | A | A | A | B | A | A | B | B | A |
| | Acid-resistant hot water test750H | A | A | A | C | A | A | C | C | A |
| | Acid-resistant hot water test1000H | A | A | A | C | B | B | C | C | A |
| Mass change rate (%) | Acid-resistant hot water test250H | A3.5 | A3.6 | A3.5 | A4.9 | A3.9 | A4.0 | A4.6 | A4.7 | A3.3 |
| | Acid-resistant hot water test500H | A3.8 | A3.8 | A3.6 | B5.3 | A4.3 | A4.4 | A4.9 | B5.8 | A3.5 |
| | Acid-resistant hot water test750H | A4.0 | A4.3 | A4.1 | B6.5 | A4.6 | A4.7 | B5.6 | B7.6 | A3.5 |
| | Acid-resistant hot water test1000H | A4.2 | A4.5 | A4.2 | B7.8 | B5.1 | B5.4 | B6.8 | B9.4 | A3.6 |

[Table 6]

| | | Ex. 19 | Ex. 20 | Ex. 21 | Comp. ex. 1 | Comp. ex. 2 | Ex. 22 | Comp. ex. 3 | Ex. 23 |
|---|---|---|---|---|---|---|---|---|---|
| Adhesion evaluation A | Initial adhesion strength (N/cm) | 3.1 | 2.3 | 3.1 | 2.6 | 3.3 | 3.0 | 1.6 | 2.3 |
| | Acid-resistant hot water test 250H | A | A | A | A | A | A | A | A |

(continued)

| | | Ex. 19 | Ex. 20 | Ex. 21 | Comp. ex. 1 | Comp. ex. 2 | Ex. 22 | Comp. ex. 3 | Ex. 23 |
|---|---|---|---|---|---|---|---|---|---|
| Bonding to electrolyte membrane | Acid-resistant hot water test 500H | A | A | A | A | A | A | X | A |
| | Acid-resistant hot water test 750H | A | A | A | X | A | A | X | A |
| | Acid-resistant hot water test 1000H | A | A | A | X | X | X | X | X |
| Adhesion evaluation B | Initial adhesion strength (N/cm) | 3.4 | 2.3 | 3.3 | 2.9 | 3.5 | 3.2 | 1.8 | 2.3 |
| | Acid-resistant hot water test250H | A | B | A | A | A | A | C | B |
| Bonding of adhesive layers to each other | Acid-resistant hot water test500H | A | B | B | C | B | C | C | B |
| | Acid-resistant hot water test750H | B | B | C | X | C | C | X | B |
| | Acid-resistant hot water test1000H | B | B | C | X | C | X | X | X |
| Mass change rate (%) | Acid-resistant hot water test250H | A4.2 | A4.0 | A4.5 | B6.9 | B5.9 | B6.9 | B6.9 | A4.9 |
| | Acid-resistant hot water test500H | A4.3 | A4.3 | B6.5 | B8.5 | B8.1 | B8.5 | B8.1 | B6.0 |
| | Acid-resistant hot water test750H | A4.6 | A4.5 | B7.6 | X10.9 | B9.1 | B9.5 | B9.5 | B8.8 |
| | Acid-resistant hot water test1000H | B5.1 | A4.7 | B8.5 | X12.5 | X10.8 | X12.0 | X10.8 | X10.5 |

It was confirmed that the sealing materials of Examples 1 to 23 exhibited good adhesion between the solid polymer electrolyte membrane and the sealing material, and were excellent in acid and hot water resistance.

INDUSTRIAL APPLICABILITY

The polymer electrolyte fuel cell sealing material of the present invention has excellent resistance to acid and hot water and maintains high sealing properties, and therefore can be operated for a long period of time in an acidic hot water environment.

REFERENCE SIGNS LIST

1 Sheet-like adhesive member
2 Substrate
3 Adhesive layer
10 Sealing material
20 Electrode
30 Separator
100 Unit cell

**Claims**

1. A polymer electrolyte fuel cell sealing material comprising: a sheet-like adhesive member,

   wherein the sheet-like adhesive member comprises an acrylic rubber (a), an epoxy resin (b), and an epoxy curing agent (c),
   and the initial adhesive strength is 1.5 N/cm or higher as measured by the following method (1) to (4):

   (1) Prepare two sheets of a polymer electrolyte fuel cell sealing material cut to a width of 25 mm and a length of 100 mm;
   (2) Bring the two sheet-like adhesive members into contact with each other over a length of 80 mm and bond them together using a roll laminator under conditions of a temperature of 100 °C, a pressure of 4 N/cm, and a lamination speed of 1 m/min to obtain a test piece;
   (3) Paste two polyimide films for fixing to a universal tensile testing machine onto two locations of the sheet-like adhesive members at non-contact areas of the test piece, fix one end of one of the attached polyimide films to the lower chuck of the tensile device of the universal tensile testing machine, and fix one end of the other attached polyimide film to the upper chuck of the tensile device of the universal tensile testing machine; and
   (4) Use the universal tensile testing machine to measure the initial adhesive strength, which is the T-peel strength, of the fixed test piece at a tensile speed of 50 mm/min.

2. The polymer electrolyte fuel cell sealing material according to claim 1, wherein the acrylic rubber (a) has at least one functional group selected from the group consisting of a carboxyl group, a hydroxyl group, and an epoxy group.

3. The polymer electrolyte fuel cell sealing material according to claim 1, wherein the epoxy resin (b) has a number-average molecular weight of 300 to 5,500.

4. The polymer electrolyte fuel cell sealing material according to claim 1, wherein the epoxy curing agent (c) is an acid anhydride, a phenolic compound, or a diamine compound.

5. The polymer electrolyte fuel cell sealing material according to claim 1, wherein the sheet-like adhesive member further contains a curing accelerator (d).

6. The polymer electrolyte fuel cell sealing material according to claim 5, wherein the curing accelerator (d) is dicyandiamide, a hydrazide compound, or an imidazole compound.

7. The polymer electrolyte fuel cell sealing material according to claim 2, wherein the acrylic rubber (a) comprises a copolymer of at least one selected from acrylic acid esters and derivatives thereof, and at least one selected from acrylonitrile and derivatives thereof.

8. The polymer electrolyte fuel cell sealing material according to claim 7, wherein the acrylic rubber (a) has a ratio (nitrile group/carbonyl group), measured by an ATR method using a Fourier transform infrared spectrophotometer, of an absorbance peak area at a wavenumber ($1740\ cm^{-1}$) attributable to a carbonyl group of at least one selected from acrylic esters and derivatives thereof, to an absorbance peak area at a wavenumber ($2240\ cm^{-1}$) attributable to a nitrile group of at least one selected from acrylonitrile and derivatives thereof, of 0.001 to 0.05.

9. The polymer electrolyte fuel cell sealing material according to claim 3, wherein the epoxy resin (b) is present in an amount of 1 to 150 parts by mass per 100 parts by mass of the acrylic rubber (a).

**10.** The polymer electrolyte fuel cell sealing material according to claim 1, wherein the functional group equivalent ratio of the epoxy curing agent (c) to the epoxy resin (b) is 0.1 to 0.9.

# FIG. 1

# FIG. 2

# FIG. 3

# FIG. 4

# FIG. 5

# FIG. 6

## INTERNATIONAL SEARCH REPORT

| International application No. |
| --- |
| **PCT/JP2024/025178** |

**A. CLASSIFICATION OF SUBJECT MATTER**

*H01M 8/028*(2016.01)i; *C09J 7/30*(2018.01)i; *C09J 11/06*(2006.01)i; *C09J 133/00*(2006.01)i; *C09J 133/20*(2006.01)i; *C09J 163/00*(2006.01)i; *H01M 8/0284*(2016.01)i; *H01M 8/10*(2016.01)i
FI: H01M8/028; C09J7/30; C09J11/06; C09J133/00; C09J133/20; C09J163/00; H01M8/0284; H01M8/10 101

According to International Patent Classification (IPC) or to both national classification and IPC

**B. FIELDS SEARCHED**

Minimum documentation searched (classification system followed by classification symbols)

H01M8/028; C09J7/30; C09J11/06; C09J133/00; C09J133/20; C09J163/00; H01M8/0284; H01M8/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2022/270286 A1 (TOMOEGAWA PAPER CO., LTD.) 29 December 2022 (2022-12-29) paragraphs [0013]-[0047], fig. 1-5 | 1-3, 5-6, 9 |
| Y | paragraphs [0013]-[0047], fig. 1-5 | 4, 10 |
| A | paragraphs [0013]-[0047], fig. 1-5 | 7-8 |
| Y | JP 2019-031646 A (NISSHINBO CHEMICAL INC.) 28 February 2019 (2019-02-28) paragraphs [0016]-[0021] | 4, 10 |
| A | paragraphs [0016]-[0021] | 7-8 |
| Y | JP 2007-018977 A (THREE BOND CO., LTD.) 25 January 2007 (2007-01-25) paragraphs [0027]-[0029] | 4, 10 |
| A | paragraphs [0027]-[0029] | 7-8 |
| A | JP 2008-140774 A (TORAY INDUSTRIES, INC.) 19 June 2008 (2008-06-19) paragraphs [0012]-[0076], fig. 1-2 | 1-10 |

☐ Further documents are listed in the continuation of Box C.      ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 September 2024** | **17 September 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
**Information on patent family members**

International application No.

**PCT/JP2024/025178**

| Patent document cited in search report | | | Publication date (day/month/year) | Patent family member(s) | | | Publication date (day/month/year) |
|---|---|---|---|---|---|---|---|
| WO | 2022/270286 | A1 | 29 December 2022 | EP paragraphs [0016]-[0083], fig. 1-5 CN KR | 4349906 117501484 10-2024-0024785 | A1 A A | |
| JP | 2019-031646 | A | 28 February 2019 | US paragraphs [0037]-[0042] WO EP KR CN CA | 2020/0172697 2019/031585 3666843 10-2020-0039675 111108169 3072041 | A1 A1 A1 A A A1 | |
| JP | 2007-018977 | A | 25 January 2007 | (Family: none) | | | |
| JP | 2008-140774 | A | 19 June 2008 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06119928 A
- JP H09199145 A

- JP 2004269782 A